# EUROPEAN PATENT SPECIFICATION

(11) **EP 3 536 670 B1**
(45) Date of publication and mention of the grant of the patent: **10.11.2021**
(21) Application number: 18822643.5
(22) Date of filing: 09.05.2018
(51) Int. Cl.: B01D 53/14, B01D 53/92, B63J 4/00, C02F 1/461, C02F 103/18

(54) **ELECTROLYTIC TREATMENT DEVICE AND TREATMENT SYSTEM**
ELEKTROLYTISCHE BEHANDLUNGSVORRICHTUNG UND BEHANDLUNGSSYSTEM
DISPOSITIF DE TRAITEMENT ÉLECTROLYTIQUE ET SYSTÈME DE TRAITEMENT

(30) Priority: 28.06.2017 JP 2017126090
(43) Date of publication of application: 11.09.2019
(73) Proprietor: Fuji Electric Co., Ltd., Kawasaki-shi, Kanagawa 210-9530 (JP); School Judicial Person Ikutoku Gakuen, Atsugi-shi, Kanagawa 243-0292 (JP)
(72) Inventor: INUI, Takashi, Kawasaki-shi Kanagawa 210-9530 (JP); TOYOZUMI, Hiroyuki, Kawasaki-shi Kanagawa 210-9530 (JP); ZUKERAN, Akinori, Atsugi-shi Kanagawa 243-0292 (JP); OKU, Tomohiro, Chiba-City, Chiba 263-0031 (JP); NAKADA, Yuta, Nagasaki-City, Nagasaki 850-0861 (JP)
(74) Representative: MERH-IP Matias Erny Reichl Hoffmann Patentanwälte PartG mbB
(86) International application number: PCT/JP2018/017956
(87) International publication number: WO 2019/003651

(56) References cited:
- WO-A1-2011/016781
- WO-A1-2014/098120
- JP-A- H06 246 267
- JP-A- H06 246 267
- JP-A- 2004 089 770
- JP-A- 2008 212 334
- JP-A- 2009 112 996
- SU-A1- 1 470 669
- US-A1- 2014 161 678

## Description

### BACKGROUND

### 1. TECHNICAL FIELD

The present invention relates to an electrolytic treatment apparatus for a ship, and a treatment system.

### 2. RELATED ART

Conventional known scrubber apparatuses treat exhaust gases on ships or the like using solutions containing alkaline substances (see Patent Literature 1, for example). In addition, known treatment apparatuses sterilize ballast water or the like on ships (see Patent Literature 2 or 3, for example). Further examples of related art are described in Patent Literature 4 and 5.
Patent Literature 1: Japanese Patent Application Publication No. JP 2004-89770
Patent Literature 2: Japanese Patent Application Publication No. JP 2005-342626
Patent Literature 3: International Patent Application No. WO 2011/016781 A1
Patent Literature 4: Soviet Union Patent Application No. SU 1 470 669 A1
Patent Literature 5: Japanese Patent Application No. JP H06-246267 A

Preferably, apparatuses installed on ships or the like have small sizes.

### Summary of the invention

In order to solve the above-mentioned drawbacks, a first aspect of the present invention provides an electrolytic treatment apparatus according to claim 1. The electrolytic treatment apparatus includes an electrolytic tank having a cathode and an anode. The electrolytic treatment apparatus includes an injecting portion that injects a liquid into the electrolytic tank. The electrolytic treatment apparatus includes at least one diaphragm that partitions an inner space of the electrolytic tank into a cathode-side region including the cathode and an anode-side region including the anode, and makes a liquid in the cathode-side region and a liquid in the anode-side region electrically connected. The electrolytic treatment apparatus includes a cathode-side discharging portion that supplies, to an exhaust gas treatment apparatus, a cathode-side solution generated in the cathode-side region by electrolyzing the liquid. The electrolytic treatment apparatus includes an anode-side discharging portion that supplies, to a sterilizing apparatus, an anode-side solution generated in the anode-side region by electrolyzing the liquid.

The sterilizing apparatus may include a ballast tank to store ballast water on a ship. A volume of at least one of the cathode-side region and the anode-side region is variable. A position of the diaphragm in the electrolytic tank may be variable. The at least one diaphragm may include a plurality of diaphragms that are insertable and removable at different positions in the electrolytic tank.

The injecting portion may inject seawater into the electrolytic tank. The exhaust gas treatment apparatus may eliminate a targeted elimination substance contained in an exhaust gas by bringing the cathode-side solution into contact with the exhaust gas. The injecting portion may inject, as at least part of the liquid and into the electrolytic tank, drainage discharged by the exhaust gas treatment apparatus. The injecting portion may inject, into the anode-side region, at least part of drainage discharged by the exhaust gas treatment apparatus.

The electrolytic treatment apparatus may include a storage tank provided for at least one of the cathode-side solution and the anode-side solution discharged by the electrolytic tank.

The electrolytic treatment apparatus includes a volume control portion that controls a volume of at least one of the cathode-side region and the anode-side region based on an operation condition of a ship on which the electrolytic treatment apparatus is installed.

The anode-side discharging portion may control a volumetric flow rate per unit time of the anode-side solution based on a pH value of a liquid injected into the anode-side region or a pH value of the anode-side solution. The electrolytic treatment apparatus may include a power supply that supplies electrical power to the cathode and the anode. The power supply may control a current flowing between the anode and the cathode based on a pH value of a liquid injected into the anode-side region or a pH value of the anode-side solution.

A second aspect of the present invention provides a treatment system including: the electrolytic treatment apparatus according to the first aspect; the sterilizing apparatus; and the exhaust gas treatment apparatus.

### BRIEF DESCRIPTION OF THE DRAWINGS

FIG. 1 is a block diagram illustrating an exemplary treatment system 10 according to one embodiment of the present invention.
FIG. 2 is a schematic view illustrating an electrolytic treatment apparatus 100, outside of the scope of the invention.
FIG. 3 is a schematic view illustrating an exemplary electrolytic treatment apparatus 100.
FIG. 4 is a schematic view illustrating another exemplary electrolytic treatment apparatus 100.
FIG. 5 is a figure illustrating the treatment system 10 in the closed driving mode.
FIG. 6 is a figure illustrating an exemplary operation of the electrolytic treatment apparatus 100 in the closed driving mode.
FIG. 7 illustrates an example in which the volume ratio between a cathode-side region 126 and an anode-side region 128 is controlled according to the operation condition of a ship.
FIG. 8 is a block diagram Illustrating another exemplary treatment system 10.
FIG. 9 is a graph illustrating a relationship between the pH value of a liquid in the anode-side region 128 and the ratio of HClO contained in an anode-side solution.
FIG. 10 is a figure illustrating another exemplary operation of the electrolytic treatment apparatus 100.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

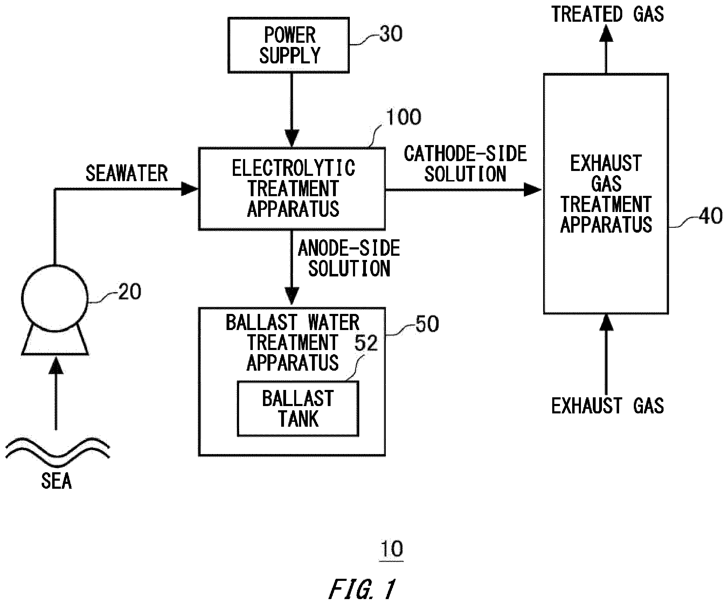

FIG. 1 is a block diagram illustrating an exemplary treatment system 10 according to one embodiment of the present invention. The treatment system 10 performs electrolytic treatment on a liquid to thereby generate a cathode-side solution containing an alkaline substance, and an anode-side solution containing an acid. Although an exemplary liquid used in the treatment system 10 is seawater, it may be any liquid as along as it can generate an alkaline substance and an acid as a result of electrolytic treatment. The treatment system 10 is installed on a ship.

The treatment system 10 includes a pump 20, a power supply 30, an exhaust gas treatment apparatus 40, a ballast water treatment apparatus 50, and an electrolytic treatment apparatus 100. The pump 20 supplies a liquid to the electrolytic treatment apparatus 100. The pump 20 in the present example pumps up seawater from the sea, and supplies the seawater to the electrolytic treatment apparatus 100.

The electrolytic treatment apparatus 100 performs electrolytic treatment on the liquid supplied from the pump 20. The power supply 30 supplies electrical power to a cathode and an anode provided to the electrolytic treatment apparatus 100. The electrolytic treatment apparatus 100 supplies, to the exhaust gas treatment apparatus 40, a cathode-side solution generated near the cathode as a result of the electrolytic treatment. In addition, the electrolytic treatment apparatus 100 supplies, to the ballast water treatment apparatus 50, an anode-side solution generated near the anode as a result of the electrolytic treatment.

The exhaust gas treatment apparatus 40 uses the cathode-side solution to eliminate a targeted elimination substance contained in an exhaust gas generated by an exhaust gas source. The exhaust gas treatment apparatus 40 brings the exhaust gas into contact with the cathode-side solution to thereby trigger a reaction between the targeted elimination substance contained in the exhaust gas, and an alkaline substance contained in the cathode-side solution, and eliminate the targeted elimination substance. For example, the exhaust gas treatment apparatus 40 sprays the cathode-side solution into a housing in which the exhaust gas flows to thereby bring the exhaust gas into contact with the cathode-side solution. The exhaust gas treatment apparatus 40 discharges, to the outside, the treated gas from which the targeted elimination substance is eliminated.

For example, the exhaust gas source is a propulsion engine of a ship, a power-generating apparatus (for example, a power-generating engine) provided on a ship, a boiler provided on a ship, or the like. For example, the targeted elimination substance is a sulfur oxide (Sox), or a nitride oxide (NOx). For example, the alkaline substance is MgCO₃ or Mg(OH)₂.

The ballast water treatment apparatus 50 is an exemplary sterilizing apparatus that sterilizes ballast water on a ship using an anode-side solution. The ballast water treatment apparatus 50 may sterilize ballast water by mixing the anode-side solution into the ballast water. The ballast water treatment apparatus 50 may include a ballast tank 52 that stores sterilized ballast water. The ballast water treatment apparatus 50 may include a sterilizing portion that sterilizes ballast water. The ballast water treatment apparatus 50 may further include a filter or the like that eliminates predetermined substances and objects contained in ballast water. The treatment system 10 may further include a pump that pumps up seawater to be used as ballast water, and supplies the seawater to the ballast water treatment apparatus 50. In another example, the ballast water treatment apparatus 50 may store the anode-side solution itself as ballast water in the ballast tank 52. For example, an acid contained in the anode-side solution is a hypochlorous acid (HClO) or hypochlorite ions (ClO⁻). These acids enable elimination of plankton or bacteria such as colon bacilli that are contained in ballast water.

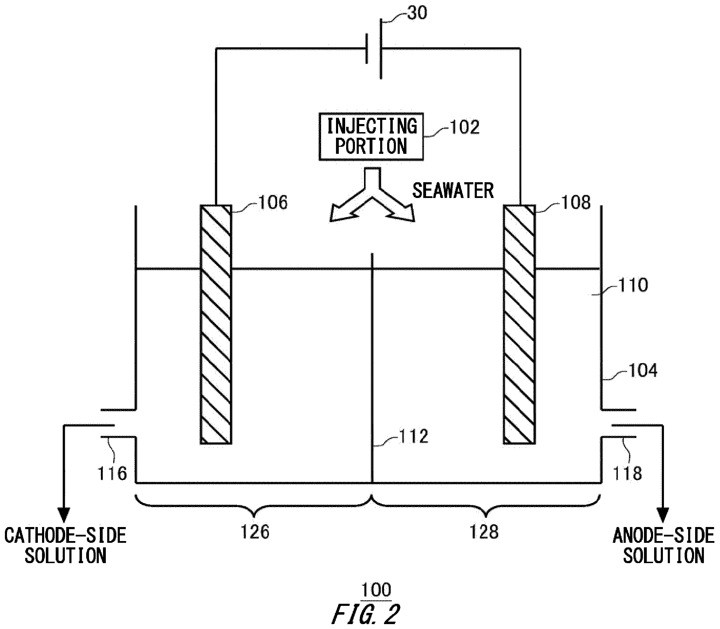

FIG. 2 is a schematic view illustrating an electrolytic treatment apparatus 100, outside of the scope of the present invention. The electrolytic treatment apparatus 100 includes an electrolytic tank 104, a diaphragm 112, an injecting portion 102, a cathode-side discharging portion 116, and an anode-side discharging portion 118.

The injecting portion 102 injects a liquid 110 into the electrolytic tank 104. For example, the injecting portion 102 is a pipe through which the liquid 110 is conveyed. The liquid 110 in the present example is seawater. The electrolytic tank 104 stores the liquid 110. A cathode 106 and an anode 108 are inserted into the electrolytic tank 104. The cathode 106 and anode 108 are formed of a carbon-containing material, for example. Predetermined electrical power is applied to the cathode 106 and anode 108 by the power supply 30.

The diaphragm 112 partitions the inner space of the electrolytic tank 104 into a cathode-side region 126 including the cathode 106, and an anode-side region 128 including the anode 108. Here, partitioning means that movement of a liquid between the cathode-side region 126 and the anode-side region 128 is suppressed as compared with the case where the diaphragm 112 is not provided. The diaphragm 112 needs not completely block movement of the liquid between the cathode-side region 126 and the anode-side region 128. In addition, the diaphragm 112 makes a liquid in the cathode-side region 126 and a liquid in the anode-side region 128 electrically connected such that a current can flow between the cathode 106 and the anode 108. Note that the injecting portion 102 may inject seawater into both the cathode-side region 126 and the anode-side region 128.

For example, the diaphragm 112 is a fabric. More specific examples of the diaphragm 112 are those formed by weaving chemical fibers into a thin film, such as Tetoron or rayon. By immersing such a diaphragm 112 in the liquid 110, it becomes possible to make the cathode 106 and the anode 108 electrically connected while at the same time suppressing movement of a liquid.

For appropriate partitioning into the cathode-side region 126 and the anode-side region 128, the diaphragm 112 is preferably provided along the entire boundary between the cathode-side region 126 and the anode-side region 128. In another example also outside of the scope of the invention, the diaphragm 112 needs not be provided at part of the boundary between the cathode-side region 126 and the anode-side region 128.

Seawater contains ions such as Mg²⁺, Cl⁻, or HCO₃⁻. If a voltage is applied between the cathode 106 and anode 108 immersed in seawater, H2 and OH⁻ are generated from water (H₂O) at the cathode 106, and Cl₂ is generated from Cl⁻ at the anode 108.

OH⁻ generated at the cathode reacts with HCO₃⁻ in seawater to generate CO₃²⁻. C0₃²⁻ reacts with Mg²⁺ in seawater to generate MgCO₃, which is an alkaline substance. In addition, OH⁻ generated at the cathode reacts with Mg²⁺ in seawater to generate Mg(OH)₂, which is an alkaline substance.

Cl₂ generated at the anode reacts with water to generate a hypochlorous acid (HClO). In addition, a hypochlorous acid can be present also as hypochlorite ions (ClO⁻) due to chemical equilibrium in water. The reaction formulae of the above-mentioned reaction processes are as follows:
Anodic reaction:

   2Cl⁻→Cl₂+2e⁻
Cathodic reaction:

   2H₂O+2e⁻→2OH⁻+H₂
Entire electrolysis:

   2Cl⁻+2H₂O→2OH⁻+Cl₂+H₂
Reaction in aqueous solution (anode-side):

   Cl₂+H₂O↔H⁺+Cl⁻+HClO

   HClO↔H⁺+ClO⁻
Reaction in aqueous solution (cathode-side):

   OH⁻+HCO₃⁻↔CO₃²⁻+H₂O

   Mg²⁺+CO₃²⁻↔MgCO₃

   Mg²⁺+20H⁻↔Mg(OH)₂

Note that, by providing the diaphragm 112, the reaction between OH⁻ generated in a cathodic reaction and H⁺ generated in a (anode-side) reaction in an aqueous solution to generate water can be suppressed, and an alkaline-substance generating reaction, and a hypochlorous-acid generating reaction can be enhanced. Because of this, a cathode-side solution containing an alkaline substance at high concentration, and an anode-side solution containing a hypochlorous acid at high concentration can be generated using one electrolytic tank 104. Because of this, the size of the apparatus can be reduced. The electrolytic treatment apparatus 100 is particularly useful on a ship or the like with a limited installation space for the apparatus.

The cathode-side discharging portion 116 supplies, to the exhaust gas treatment apparatus 40, the cathode-side solution generated in the cathode-side region 126 by electrolyzing the liquid 110. The anode-side discharging portion 118 supplies, to the ballast water treatment apparatus 50, the anode-side solution generated in the anode-side region 128 by electrolyzing the liquid 110. The cathode-side discharging portion 116 and anode-side discharging portion 118 may be discharge ports provided to the electrolytic tank 104.

The exhaust gas treatment apparatus 40 uses the cathode-side solution to treat an exhaust gas. The cathode-side solution in the present example contains an alkaline substance at high concentration as compared with seawater. Because of this, the targeted elimination substance contained in the exhaust gas can be eliminated efficiently. The ballast water treatment apparatus 50 uses the anode-side solution to sterilize ballast water. The anode-side solution in the present example contains a hypochlorous acid at high concentration. Because of this, ballast water can be sterilized efficiently.

The exhaust gas treatment apparatus 40 may release, to the sea, the cathode-side solution (drainage) with which an exhaust gas was treated, or may supply it back to the electrolytic treatment apparatus 100. The treatment system 10 may have two lines including a line for releasing drainage of the exhaust gas treatment apparatus 40 to the sea, and a line for supplying it back to the electrolytic treatment apparatus 100. For example, the exhaust gas treatment apparatus 40 releases drainage to the sea in a sea area where it is allowed to release drainage. If drainage is released to the sea, bound substances of acidic substances and a targeted elimination substance contained in the drainage (for example, discharge-restricted substances) may be eliminated using a filter or the like, or the pH value of the drainage may be adjusted to fall within a predetermined range using a neutralizer or the like. The exhaust gas treatment apparatus 40 supplies drainage back to the electrolytic treatment apparatus 100 in a sea area where it is not allowed to release drainage. In the present specification, the mode in which drainage of the exhaust gas treatment apparatus 40 is released to the sea is referred to as an open driving mode, and the mode in which drainage is supplied back to the electrolytic treatment apparatus 100 is referred to as a closed driving mode.

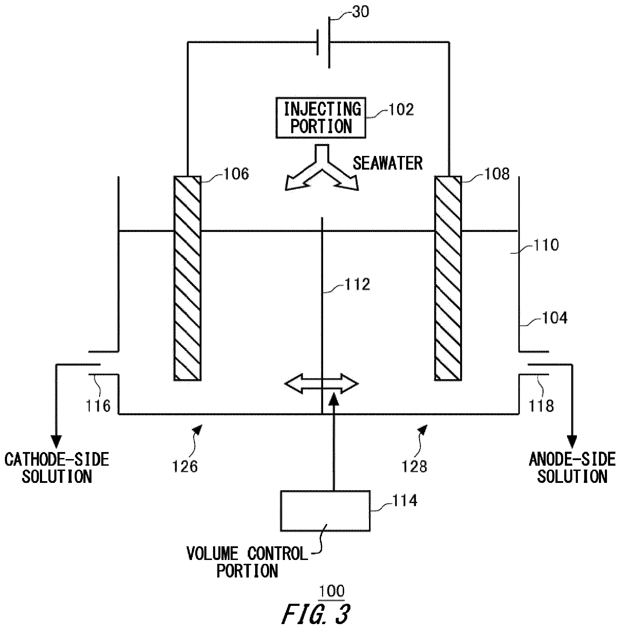

FIG. 3 is a schematic view illustrating an exemplary electrolytic treatment apparatus 100. In the electrolytic treatment apparatus 100 in the present example, the volume of the cathode-side region 126 and the anode-side region 128 is variable. The electrolytic treatment apparatus 100 includes a volume control portion 114 that controls the volume of the cathode-side region 126 and the anode-side region 128. In other respects, the structure is the same as that of the electrolytic treatment apparatus 100 explained with reference to FIG. 1 and FIG. 2.

For example, in the electrolytic treatment apparatus 100, the position of the diaphragm 112 in the electrolytic tank 104 is variable. In this case, the volume control portion 114 controls the position of the diaphragm 112 to thereby control the volumes of both the cathode-side region 126 and the anode-side region 128. Note that the volumes of the cathode-side region 126 and the anode-side region 128 may be able to be varied by another method. For example, the volume of at least one of the cathode-side region 126 and the anode-side region 128 may be changed by moving the outer wall of the electrolytic tank 104.

The diaphragm 112 may be movable in the tank, while being kept located in the electrolytic tank 104. The diaphragm 112 may be movable in the tank, while the liquid 110 is stored in the electrolytic tank 104. Openings to connect the cathode-side region 126 and the anode-side region 128 may be provided at end portions of the diaphragm 112 such that a liquid can move between the cathode-side region 126 and the anode-side region 128 along with movement of the diaphragm 112.

The volume control portion 114 controls volume of the cathode-side region 126 and the anode-side region 128 based on the operation condition of a ship on which the electrolytic treatment apparatus 100 is installed. Either one of the cathode-side solution and anode-side solution should be generated in a large amount depending on the operation condition of a ship. The operation condition of a ship includes whether the ship is at anchor or sailing; and optionally: sailing speed of the ship, the current position of the ship; the running condition of an exhaust gas source such as a propulsion engine; whether or not ballast water is being injected into the ballast tank 52; and so on.

If ballast water is injected into the ballast tank 52 of the ship, it is preferable to generate the anode-side solution in a large amount in order to inject the ballast water fast. In this case, the volume control portion 114 increases the volume of the anode-side region 128. Increasing the volume of the anode-side region 128 ensures that a liquid stays in the anode-side region 128 for a sufficiently long time, even if the volumetric flow rates of a liquid injected into the anode-side region 128 and discharged therefrom are high. Because of this, the concentration of an acid contained in the anode-side solution can be increased. In the present example, an increase of the volume of the anode-side region 128 decreases the volume of the cathode-side region 126. Note that, since a ship is at anchor if ballast water is injected into the ballast tank 52 of the ship, the amount of exhaust gas discharged from a propulsion engine or the like of the ship is not so large. Because of this, lowering the volumetric flow rate of the cathode-side solution, and reducing the volume of the cathode-side region 126 do not give rise to problems.

In addition, the amount of exhaust gas discharged from a propulsion engine or the like of a ship increases if the ship is sailing. On the other hand, the ballast tank 52 already stores ballast water. In this case, the volume control portion 114 increases the volume of the cathode-side region 126, and reduces the volume of the anode-side region 128. Thereby, even if the volumetric flow rates of a liquid injected into the cathode-side region 126 and discharged therefrom are high, it becomes possible to ensure that the liquid stays in the cathode-side region 126 for a sufficiently long time. Because of this, the concentration of an alkaline substance in the cathode-side solution can be increased. The volume control portion 114 may control the volume of at least one of the cathode-side region 126 and the anode-side region 128 based on the volumetric flow rate per unit time of at least one of the cathode-side solution and the anode-side solution.

In addition, the amounts of unnecessary solutions generated can be reduced by reducing the volume of the cathode-side region 126 or anode-side region 128. The cathode-side discharging portion 116 and anode-side discharging portion 118 may inject generated solutions into storage tanks. Since the amounts of unnecessary solutions generated can be reduced, the sizes of the storage tanks can be reduced. Note that also if a ship is sailing, the anode-side discharging portion 118 may inject the generated anode-side solution into the ballast tank 52. In this case, in order to keep the amount of seawater in the ballast tank 52 unchanged, ballast water may be supplied from the ballast tank 52 to the electrolytic treatment apparatus 100 in an amount corresponding to the anode-side solution having been injected.

Note that the volume control portion 114 may be a general-purpose computer. In this case, the computer has an installed program for causing the computer to function as the volume control portion 114. The volume control portion 114 may be a dedicated circuit or apparatus to function as the volume control portion 114.

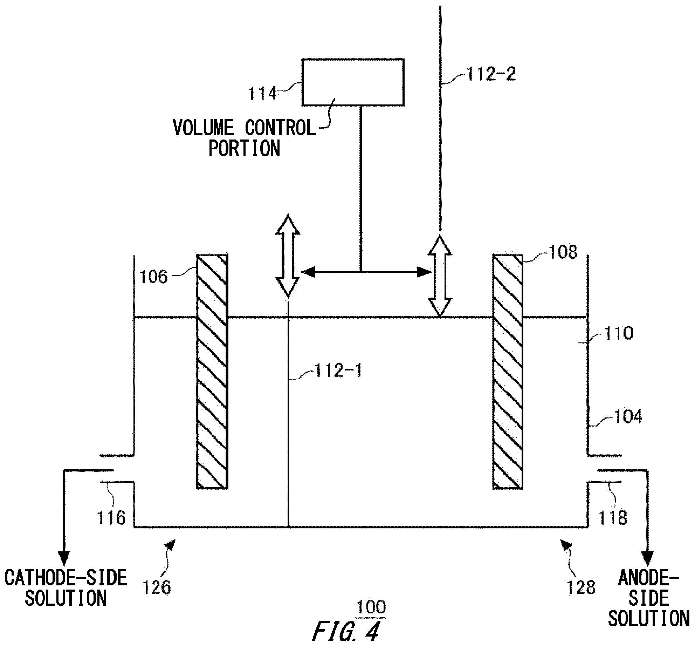

FIG. 4 is a schematic view illustrating another exemplary electrolytic treatment apparatus 100. The electrolytic treatment apparatus 100 in the present example includes a plurality of diaphragms 112 that are insertable and removable at different positions in the electrolytic tank 104. In other respects, the structure is the same as that of the electrolytic treatment apparatus 100 explained with reference to FIG. 1 to FIG. 3. Note that, in FIG. 4, the power supply 30 and injecting portion 102 are omitted.

The volume control portion 114 in the present example inserts any of the diaphragms 112 into the electrolytic tank 104, and pulls the other diaphragm 112 out of the electrolytic tank 104. By selectively inserting either one of the diaphragms 112, it is possible to control the volume of the cathode-side region 126 and the anode-side region 128. In the example illustrated in FIG. 4, by inserting a diaphragm 112-1 closer to the cathode 106, it is possible to reduce the cathode-side region 126, and increase the anode-side region 128. In addition, by inserting a diaphragm 112-2 closer to the anode 108, it is possible to increase the cathode-side region 126, and reduce the anode-side region 128. Each diaphragm 112 may be insertable at a different position between the cathode-side region 126 and the anode-side region 128.

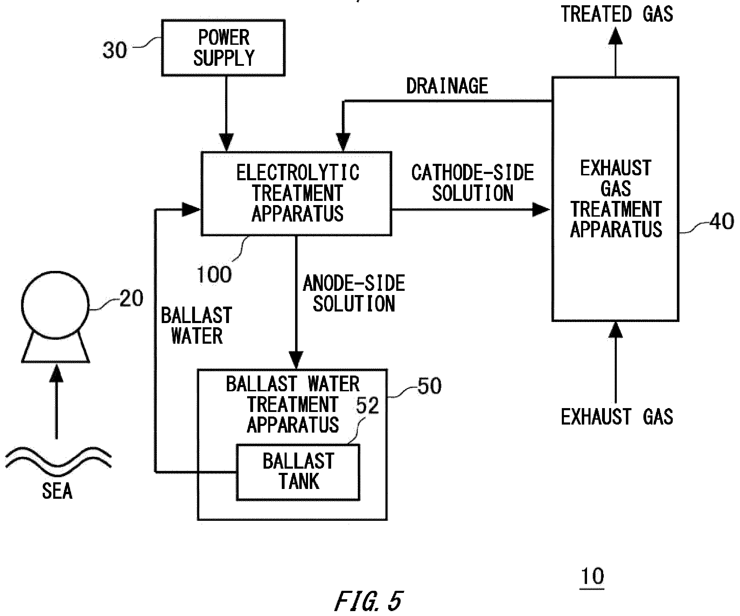

FIG. 5 is a figure illustrating the treatment system 10 in the closed driving mode. The treatment system 10 in the closed driving mode does not discharge drainage of the exhaust gas treatment apparatus 40 to the sea, but reuses it as at least part of a liquid to be injected into the electrolytic treatment apparatus 100. In addition, in the closed driving mode, the treatment system 10 may supply ballast water stored in the ballast tank 52 to the electrolytic treatment apparatus 100.

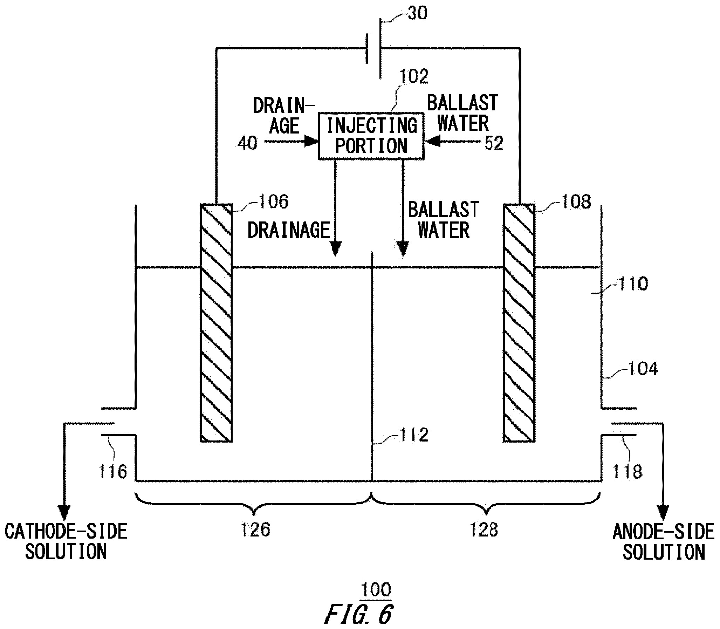

FIG. 6 is a figure illustrating an exemplary operation of the electrolytic treatment apparatus 100 in the closed driving mode. The injecting portion 102 uses drainage of the exhaust gas treatment apparatus 40 as at least part of a liquid to be injected into the electrolytic tank 104. For example, the injecting portion 102 injects the entire amount of drainage of the exhaust gas treatment apparatus 40 into the cathode-side region 126. This means that the entire amount of drainage of the exhaust gas treatment apparatus 40 loops between the cathode-side region 126 and the exhaust gas treatment apparatus 40. If a liquid looping between the cathode-side region 126 and the exhaust gas treatment apparatus 40 decreases due to evaporation or the like, the injecting portion 102 may compensate for the amount of lost liquid by supplying seawater or ballast water into the cathode-side region 126.

The injecting portion 102 may inject, into the anode-side region 128, ballast water in an amount corresponding to the anode-side solution discharged from the anode-side region 128. In addition, instead of ballast water, seawater pumped up by the pump 20 may be used. In this case, the anode-side solution is preferably supplied not to the ballast tank 52, but to a storage tank.

Although, in the closed driving mode, the concentration of an alkaline substance in drainage of the exhaust gas treatment apparatus 40 lowers, the concentration of the alkaline substance can be increased by the electrolytic treatment apparatus 100 performing electrolytic treatment on the drainage. Because of this, even if the drainage of the exhaust gas treatment apparatus 40 is caused to loop and reused, targeted elimination substances contained in an exhaust gas can be eliminated efficiently.

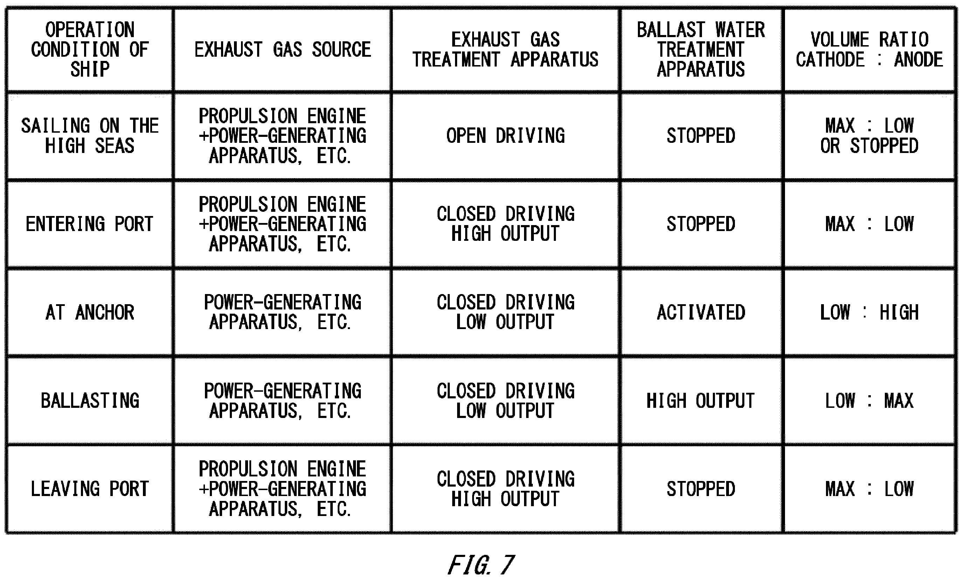

FIG. 7 illustrates an example in which the volume ratio between the cathode-side region 126 and the anode-side region 128 is controlled according to the operation condition of a ship. If a ship is sailing on the high seas, a relatively large amount of exhaust gas is discharged from a propulsion engine, a power-generating apparatus, and the like. It is supposed in the present example that if a ship is sailing on the high seas, it is allowed to discharge drainage of the exhaust gas treatment apparatus 40 to the sea. In this case, the exhaust gas treatment apparatus 40 is in the open driving mode.

Since a predetermined amount of ballast water is already stored in the ballast tank 52, injection of ballast water into the ballast tank 52 is not performed, and the ballast water treatment apparatus 50 is stopped. In this case, the volume control portion 114 may increase the volume of the cathode-side region 126, and reduce the volume of the anode-side region 128. Thereby, targeted elimination substances contained in an exhaust gas can be eliminated efficiently using the cathode-side solution having an alkaline-substance concentration increased by the electrolytic treatment apparatus 100. In addition, the anode-side solution may be stored in advance in a storage tank. The stored anode-side solution can be used in sterilization of ballast water.

Note that since if the exhaust gas treatment apparatus 40 is in the open driving mode, drainage of the gas treatment apparatus 40 is not reused, an amount of an alkaline substance consumed at the exhaust gas treatment apparatus 40 needs not be compensated for by electrolytic treatment at the electrolytic treatment apparatus 100. Because of this, if the concentration of alkaline substances originally contained in seawater is sufficient, the electrolytic treatment apparatus 100 may be stopped, and seawater pumped up by the pump 20 may be supplied to the exhaust gas treatment apparatus 40.

If a ship enters a port, a relatively large amount of exhaust gas is discharged from a propulsion engine, a power-generating apparatus, and the like. It is supposed in the present example that if a ship enters a port, it is not allowed to discharge drainage of the exhaust gas treatment apparatus 40 to the sea. In this case, the exhaust gas treatment apparatus 40 is in the closed driving mode.

Since a predetermined amount of ballast water is stored in the ballast tank 52, injection of ballast water into the ballast tank 52 is not performed, and the ballast water treatment apparatus 50 is stopped. In this case, the volume control portion 114 may maximize the volume of the cathode-side region 126, and minimize the volume of the anode-side region 128. Thereby, the concentration of an alkaline substance consumed by the exhaust gas treatment apparatus 40 can be restored by the electrolytic treatment apparatus 100, and the alkaline substance can be reused in the exhaust gas treatment apparatus 40.

Since if a ship is at anchor in a port, its propulsion engine is stopped, and the exhaust gas source is mainly its power-generating apparatus. In this case, an amount of exhaust gas to be treated by the exhaust gas treatment apparatus 40 becomes relatively small. On the other hand, injection of ballast water into the ballast tank 52 is started, and the ballast water treatment apparatus 50 is activated. In this case, the volume control portion 114 may reduce the volume of the cathode-side region 126, and increase the volume of the anode-side region 128.

While ballast water is being injected into the ballast tank 52 on a ship (ballasting), the volumetric flow rate of the ballast water into the ballast tank 52 becomes the highest, and the output from the ballast water treatment apparatus 50 becomes the largest. In this case, the volume control portion 114 may minimize the volume of the cathode-side region 126, and maximize the volume of the anode-side region 128.

If ballasting ends, and the ship leaves a port, injection of ballast water into the ballast tank 52 is stopped, and the ballast water treatment apparatus 50 is stopped. On the other hand, since its propulsion engine operates, an amount of exhaust gas to be treated by the exhaust gas treatment apparatus 40 increases relatively. In this case, the volume control portion 114 may maximize the volume of the cathode-side region 126, and minimize the volume of the anode-side region 128.

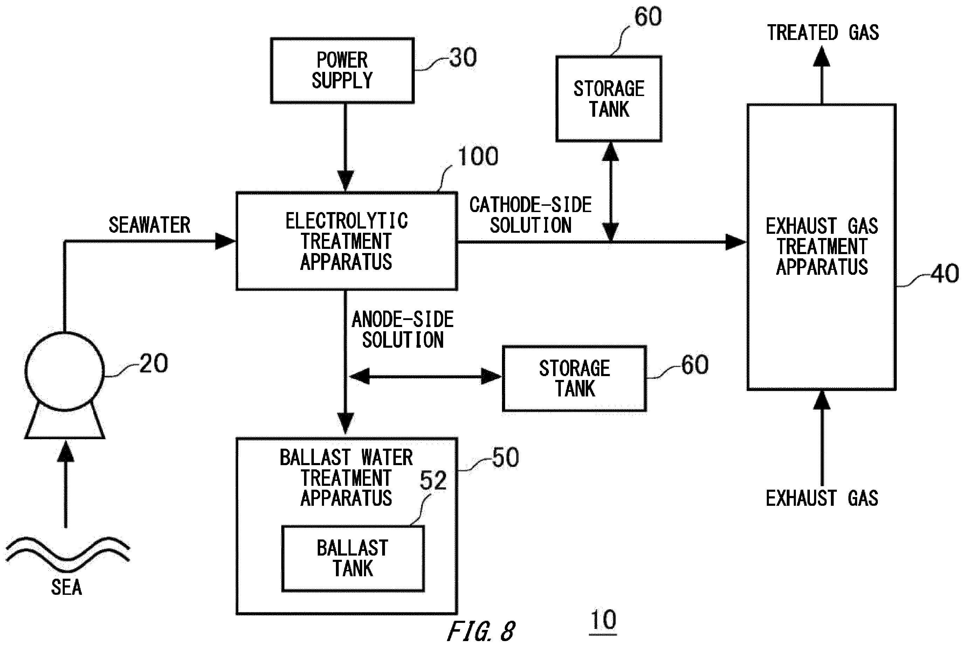

FIG. 8 is a block diagram Illustrating another exemplary treatment system 10. In addition to the configuration of the treatment system 10 explained with reference to FIG. 1 to FIG. 7, the treatment system 10 in the present example further includes a storage tank 60 provided for at least one of the cathode-side solution and the anode-side solution. In the example illustrated in FIG. 8, the treatment system 10 includes a storage tank 60 for each of the cathode-side solution and the anode-side solution.

As in the example illustrated in FIG. 7, at least one of the cathode-side solution and the anode-side solution is not required in some cases depending on the operation condition of a ship. However, since the solutions are generated by electrolytic treatment, it is not possible to generate only one of the solutions, but an unnecessary solution is generated inevitably. The storage tanks 60 store the cathode-side solution and anode-side solution not to be used. The treatment system 10 may use the cathode-side solution and anode-side solution stored in the storage tanks 60 later, or may abandon them when the situation allows abandoning. If the solutions are to be abandoned, sterilizing components (acidic substances) and alkaline substances contained in the solutions are preferably eliminated or neutralized.

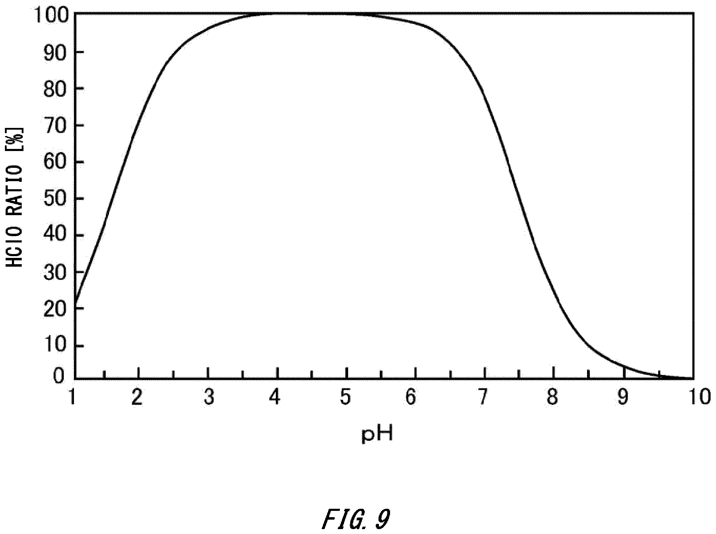

FIG. 9 is a graph illustrating a relationship between the pH value of a liquid in the anode-side region 128 and the ratio of HCIO contained in an anode-side solution. The ratio of HClO means the molar ratio of HClO to the combined amount of HCIO and ClO⁻.

In the anode-side region 128, the equilibrium state is attained when HClO and ClO⁻ are present at a predetermined abundance ratio. The abundance ratio depends on the pH value of the solution as illustrated in FIG. 9. On the other hand, HClO has a high sterilizing capability which is approximately 80 times as high as that of ClO⁻. Because of this, the pH value of the anode-side solution is preferably adjusted such that the ratio of HCIO increases. For example, the pH value of the anode-side solution may be adjusted to fall within the range of 2 to 7 inclusive, may be adjusted to fall within the range of 3 to 6 inclusive, and may be adjusted to fall within the range of 4 to 5 inclusive.

The pH value of the anode-side solution can be controlled by adjusting the volume of the anode-side region 128. Specifically, if a current flowing between the cathode 106 and the anode 108 is unchanged, and the volumetric flow rate per unit time of the anode-side solution is unchanged, an increase of the volume of the anode-side region 128 makes the pH value higher, and a decrease of the volume of the anode-side region 128 makes the pH value lower. The volume control portion 114 may control the volume of the anode-side region 128 based on a pH value of a liquid injected into the anode-side region 128 or the pH value of the anode-side solution. The treatment system 10 may further include a detecting portion that detects a liquid injected into the anode-side region 128 or the pH value of the anode-side solution.

In addition, the pH value of the anode-side solution can also be adjusted by the volumetric flow rate per unit time of the anode-side solution. Specifically, if a current flowing between the cathode 106 and the anode 108 is unchanged, and the volume of the anode-side region 128 is unchanged, reduction of the volumetric flow rate of the anode-side solution makes the pH value lower. The anode-side discharging portion 118 may control the volumetric flow rate per unit time of the anode-side solution based on a pH value of a liquid injected into the anode-side region 128 or the pH value of the anode-side solution.

In addition, the pH value of the anode-side solution can also be adjusted by means of a current flowing between the cathode 106 and the anode 108. Specifically, if the volumetric flow rate per unit time of the anode-side solution is unchanged, and the volume of the anode-side region 128 is unchanged, an increase of the current makes the pH value lower. The power supply 30 may control a current flowing between the cathode 106 and the anode 108 based on a pH value of a liquid injected into the anode-side region 128 or the pH value of the anode-side solution.

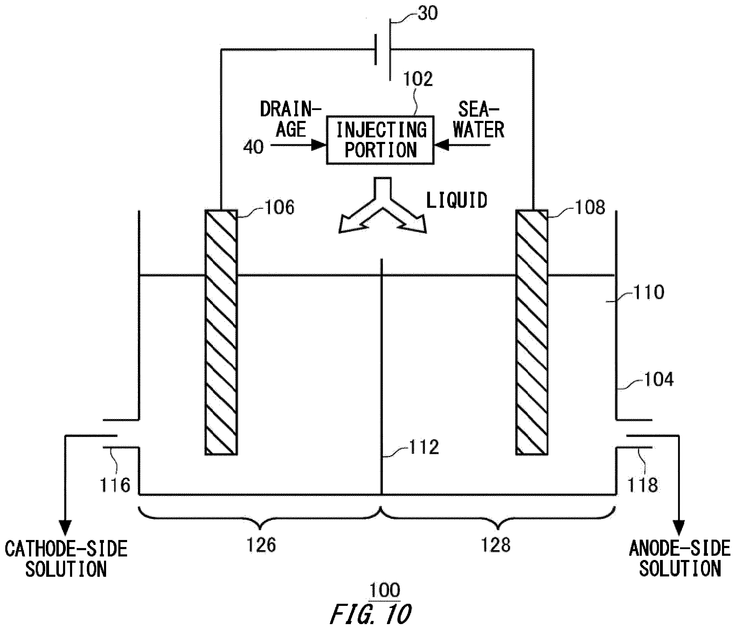

FIG. 10 is a figure illustrating another exemplary operation of the electrolytic treatment apparatus 100. The injecting portion 102 in the present example injects, into the anode-side region 128, at least part of drainage discharged by the exhaust gas treatment apparatus 40. The injecting portion 102 may inject, into the anode-side region 128, entire drainage discharged by the exhaust gas treatment apparatus 40. The injecting portion 102 may use seawater as part of a liquid to be injected into the cathode-side region 126 and anode-side region 128. The injecting portion 102 may mix drainage discharged by the exhaust gas treatment apparatus 40 with seawater, and use the mixture as a liquid to be injected into the cathode-side region 126 and anode-side region 128.

Since drainage discharged by the exhaust gas treatment apparatus 40 is brought into gas-liquid contact with an exhaust gas containing SOx, NOx or the like, it easily turns acidic. In an acidic liquid as illustrated in FIG. 9, the abundance ratio of HCIO can be made higher. Because of this, by injecting at least part of the drainage into the anode-side region 128 to thereby lower the pH value of the liquid to be injected into the anode-side region 128, the abundance ratio of HCIO in the anode-side solution can be made higher.

While the embodiments of the present invention have been described, the technical scope of the invention is not limited to the above described embodiments The scope of the invention is defined by the claims.

## Claims

1. An electrolytic treatment apparatus (100) for a ship, comprising:
an electrolytic tank (104) having a cathode (106) and an anode (108);
an injecting portion (102) configured to inject a liquid into the electrolytic tank (104);
at least one diaphragm (112) that partitions an inner space of the electrolytic tank (104) into a cathode-side region (126) including the cathode (106) and an anode-side region (128) including the anode (108), and is configured to electrically connect a liquid in the cathode-side region (126) and a liquid in the anode-side region (128);
a cathode-side discharging portion (116) configured to supply a cathode-side solution generated in the cathode-side region (126) by electrolyzing the liquid, to an exhaust gas treatment apparatus (40); and
an anode-side discharging portion (118) configured to supply an anode-side solution generated in the anode-side region (128) by electrolyzing the liquid, to a sterilizing apparatus (50), **characterized in that**:
a volume of the cathode-side region (126) and the anode-side region (128) is variable,
further comprising a volume control portion (114) configured to control a volume of the cathode-side region (126) and the anode-side region (128) based on whether the ship is at anchor or sailing, wherein:
the volume of the anode-side region (128) is increased when the ship is at anchor; and
the volume of the cathode-side region (126) is increased when the ship is sailing.

2. The electrolytic treatment apparatus (100) according to claim 1, wherein a position of the diaphragm (112) in the electrolytic tank (104) is variable.

3. The electrolytic treatment apparatus (100) according to claim 1, wherein the at least one diaphragm (112) includes a plurality of diaphragms that are insertable and removable at different positions in the electrolytic tank (104).

4. The electrolytic treatment apparatus (100) according to any one of claims 1 to 3, wherein the injecting portion (102) is configured to inject seawater into the electrolytic tank (104).

5. The electrolytic treatment apparatus (100) according to any one of claims 1 to 4, further comprising a storage tank provided for at least one of the cathode-side solution and the anode-side solution discharged by the electrolytic tank (104).

6. The electrolytic treatment apparatus (100) according to any one of claims 1 to 5, wherein the anode-side discharging portion controls a volumetric flow rate per unit time of the anode-side solution based on a pH value of a liquid injected into the anode-side region (128) or a pH value of the anode-side solution.

7. The electrolytic treatment apparatus (100) according to any one of claims 1 to 6, further comprising a power supply configured to supply electrical power to the cathode (106) and the anode (108), wherein
the power supply is configured to control a current flowing between the anode (108) and the cathode (106) based on a pH value of a liquid injected into the anode-side region (128) or a pH value of the anode-side solution.

8. A treatment system (10) comprising:
the electrolytic treatment apparatus (100) according to any one of claims 1 to 7;
the sterilizing apparatus (50); and
the exhaust gas treatment apparatus (40).

## Patentansprüche

1. Elektrolytische Behandlungsvorrichtung (100) für ein Schiff, umfassend:
einen Elektrolysebehälter (104) mit einer Kathode (106) und einer Anode (108);
einen Einspritzabschnitt (102), der zum Einspritzen einer Flüssigkeit in den Elektrolysebehälter (104) konfiguriert ist;
mindestens eine Membran (112), die einen Innenraum des Elektrolysebehälters (104) in eine kathodenseitige Region (126), welche die Kathode (106) umfasst, und eine anodenseitige Region (128), welche die Anode (108) umfasst, unterteilt und konfiguriert ist, eine Flüssigkeit in der kathodenseitigen Region (126) und
eine Flüssigkeit in der anodenseitigen Region (128) elektrisch zu verbinden;
einen kathodenseitigen Entladungsabschnitt (116), der konfiguriert ist, eine kathodenseitige Lösung, die in der kathodenseitigen Region (126) durch Elektrolysieren der Flüssigkeit erzeugt wird, einer Abgasbehandlungsvorrichtung (40) zuzuführen; und
einen anodenseitigen Entladungsabschnitt (118), der konfiguriert ist, eine anodenseitige Lösung, die in der anodenseitigen Region (128) durch Elektrolysieren der Flüssigkeit erzeugt wird, einer Sterilisationsvorrichtung (50) zuzuführen, **dadurch gekennzeichnet, dass**:
ein Volumen der kathodenseitigen Region (126) und der anodenseitigen Region (128) veränderbar ist,
ferner umfassend einen Volumensteuerungsabschnitt (114), der konfiguriert ist, ein Volumen der kathodenseitigen Region (126) und der anodenseitigen Region (128) basierend darauf zu steuern, ob das Schiff vor Anker liegt oder fährt, wobei:
das Volumen der anodenseitigen Region (128) vergrößert wird, wenn das Schiff vor Anker liegt; und
das Volumen der kathodenseitigen Region (126) vergrößert wird, wenn das Schiff fährt.

2. Elektrolytische Behandlungsvorrichtung (100) nach Anspruch 1, wobei eine Position der Membran (112) in dem Elektrolysebehälter (104) veränderbar ist.

3. Elektrolytische Behandlungsvorrichtung (100) nach Anspruch 1, wobei die mindestens eine Membran (112) mehrere Membrane umfasst, die an verschiedenen Positionen in dem Elektrolysebehälter (104) einsetzbar und daraus entfernbar sind.

4. Elektrolytische Behandlungsvorrichtung (100) nach einem der Ansprüche 1 bis 3, wobei der Einspritzabschnitt (102) konfiguriert ist, Meerwasser in den Elektrolysebehälter (104) einzuspritzen.

5. Elektrolytische Behandlungsvorrichtung (100) nach einem der Ansprüche 1 bis 4, ferner umfassend einen Vorratstank für mindestens eine von der kathodenseitigen Lösung und der anodenseitigen Lösung, die aus dem Elektrolysebehälter (104) abgegeben wird.

6. Elektrolytische Behandlungsvorrichtung (100) nach einem der Ansprüche 1 bis 5, wobei der anodenseitige Abgabeabschnitt eine Volumenstromrate pro Zeiteinheit der anodenseitigen Lösung basierend auf einem pH-Wert einer in die anodenseitige Region (128) eingespritzten Flüssigkeit oder einem pH-Wert der anodenseitigen Lösung steuert.

7. Elektrolytische Behandlungsvorrichtung (100) nach einem der Ansprüche 1 bis 6, ferner umfassend eine Stromversorgung, die konfiguriert ist, die Kathode (106) und die Anode (108) mit elektrischer Energie zu versorgen, wobei
die Stromversorgung konfiguriert ist, einen zwischen der Anode (108) und der Kathode (106) fließenden Strom basierend auf einem pH-Wert einer in die anodenseitige Region (128) eingespritzten Flüssigkeit oder einem pH-Wert der anodenseitigen Lösung zu steuern.

8. Behandlungssystem (10), umfassend:
die elektrolytische Behandlungsvorrichtung (100) nach einem der Ansprüche 1 bis 7;
die Sterilisationsvorrichtung (50); und
die Abgasbehandlungsvorrichtung (40).

## Revendications

1. Appareil de traitement électrolytique (100) pour un bateau, comprenant :
un réservoir électrolytique (104) ayant une cathode (106) et une anode (108) ;
une partie d'injection (102) configurée pour injecter un liquide dans le réservoir électrolytique (104) ;
au moins un diaphragme (112) qui sépare un espace intérieur du réservoir électrolytique (104) en une zone côté cathode (126) comprenant la cathode (106) et une zone côté anode (128) comprenant l'anode (108) et qui est configuré pour connecter électriquement un liquide dans la zone côté cathode (126) et un liquide dans la zone côté anode (128) ;
une partie de décharge côté cathode (116) configurée pour fournir une solution côté cathode, générée dans la zone côté cathode (126) en électrolysant le liquide, à un appareil de traitement de gaz d'échappement (40) ; et
une partie de décharge côté anode (118) configurée pour fournir une solution côté anode, générée dans la zone côté anode (128) en électrolysant le liquide, à un appareil de stérilisation (50), **caractérisé en ce que** :
un volume de la zone côté cathode (126) et la zone côté anode (128) est variable,
comprenant en outre une partie de contrôle de volume (114) configurée pour contrôler un volume de la zone côté cathode (126) et la zone côté anode (128) selon que le bateau est au mouillage ou navigue, dans lequel :
le volume de la zone côté anode (128) augmente lorsque le bateau est au mouillage ; et
le volume de la zone côté cathode (126) augmente lorsque le bateau navigue.

2. Appareil de traitement électrolytique (100) selon la revendication 1, dans lequel une position du diaphragme (112) dans le réservoir électrolytique (104) est variable.

3. Appareil de traitement électrolytique (100) selon la revendication 1, dans lequel l'au moins un diaphragme (112) comprend une pluralité de diaphragmes qui peuvent être insérés dans différentes positions, et retirés de celles-ci, dans le réservoir électrolytique (104).

4. Appareil de traitement électrolytique (100) selon l'une quelconque des revendications 1 à 3, dans lequel la partie d'injection (102) est configurée pour injecter de l'eau de mer dans le réservoir électrolytique (104).

5. Appareil de traitement électrolytique (100) selon l'une quelconque des revendications 1 à 4, comprenant en outre un réservoir de stockage fourni pour au moins l'une parmi la solution côté cathode et la solution côté anode déchargée par le réservoir électrolytique (104).

6. Appareil de traitement électrolytique (100) selon l'une quelconque des revendications 1 à 5, dans lequel la partie de décharge côté anode contrôle un débit volumétrique par unité de temps de la solution côté anode sur la base d'une valeur de pH d'un liquide injecté dans la zone côté anode (128) ou d'une valeur de pH de la solution côté anode.

7. Appareil de traitement électrolytique (100) selon l'une quelconque des revendications 1 à 6, comprenant en outre un bloc d'alimentation configuré pour fournir de l'énergie électrique à la cathode (106) et à l'anode (108), dans lequel
le bloc d'alimentation est configuré pour contrôler un courant circulant entre l'anode (108) et la cathode (106) sur la base d'une valeur de pH d'un liquide injecté dans la zone côté anode (128) ou d'une valeur de pH de la solution côté anode.

8. Système de traitement (10) comprenant :
l'appareil de traitement électrolytique (100) selon l'une quelconque des revendications 1 à 7 ;
l'appareil de stérilisation (50) ; et
l'appareil de traitement de gaz d'échappement (40).
